# EUROPEAN PATENT APPLICATION

(11) **EP 1 615 316 A1**
(43) Date of publication of application: **11.01.2006**
(21) Application number: 04019080.3
(22) Date of filing: 11.08.2004
(51) Int. Cl.: H02K 11/04

(54) **Circuit board for alternator of vehicle**

(30) Priority: 06.07.2004 KR 2004052201
(71) Applicant: Valeo Mando Electrical Systems Korea Limited, Kyongju-si, Kyongsangbuk-do (KR)
(72) Inventor: Lee, Hyun-Cheol, Daegu-si 701-120 (KR)
(74) Representative: TER MEER - STEINMEISTER & PARTNER GbR

(57) **Abstract**

The present invention relates to a circuit board for an alternator of a vehicle capable of achieving a counter surface of a fan by improving the structure of a circuit board, and significantly enhancing a cooling performance of an alternator by effectively outputting the air by a fan by removing an insulation wall of a conventional plate. The circuit board including a terminal in a vehicle alternator comprises a first terminal part 93a for connecting with a coil of the stator and a diode; and a second terminal part 93b for connecting with the regulator 92, wherein said terminals parts 93a and 93b are integrally provided, and wherein the circuit board 93 is assembled on an upper side of the heat sink 91, and the circuit board 93 is made of an insulation material and is formed in a flat plate shape so that a counter surface is formed in the fan.

## Description

### BACKGROUND OF THE INVENTION

### 1. Field of the Invention

The present invention relates to a circuit board including a terminal in a vehicle alternator, and in particular to a circuit board including a terminal in a vehicle alternator capable of enhancing a cooling performance of an alternator wherein an additional plate assembled to an upper side of a circuit board is removed by improving the structure of a circuit board.

### 2. Description of the Background Art

Generally, a vehicle alternator includes a casing 30 formed of a rear bracket 10 having a shaft support part 11 and a front bracket 20, a shaft 60 that is installed in the interior of the casing, with a pulley 40 being fixed to one end of the shaft 60, a rotor 70 fixed to the shaft, a fan 71 fixed to both sides of the rotor, a stator 50 fixed to an inner wall of the casing, a slip ring 52 fixed to the other end of the shaft for supplying current to the rotor, a pair of brushes 81 sliding with respect to the slip ring, a brush assembly 80 that receives the brush, a rectifier assembly 90 elastically connected with the stator, a heat sink 91 engaged to the brush assembly, and a regulator 92 that adjusts the size of an alternating current voltage generated by the stator, with being contacted with the heat sink.

In the conventional alternator, the circuit board 93 is assembled to the upper side of the heat sink 91, and a protection plate 94 is assembled to an upper side of the circuit board 93.

Here, the circuit board 93 supports the terminals forming a circuit that connected each diode in an inner side of a rear bracket 10. Since it does not operate against the fan 71 installed in the rotor 70, a plate 94 is additionally provided. The plate 94 has an insulation wall 94a near the inner surface of the rear bracket 10 for the purpose of insulation. The insulation wall 94a interferes the flow of the air generated by the fan 71.

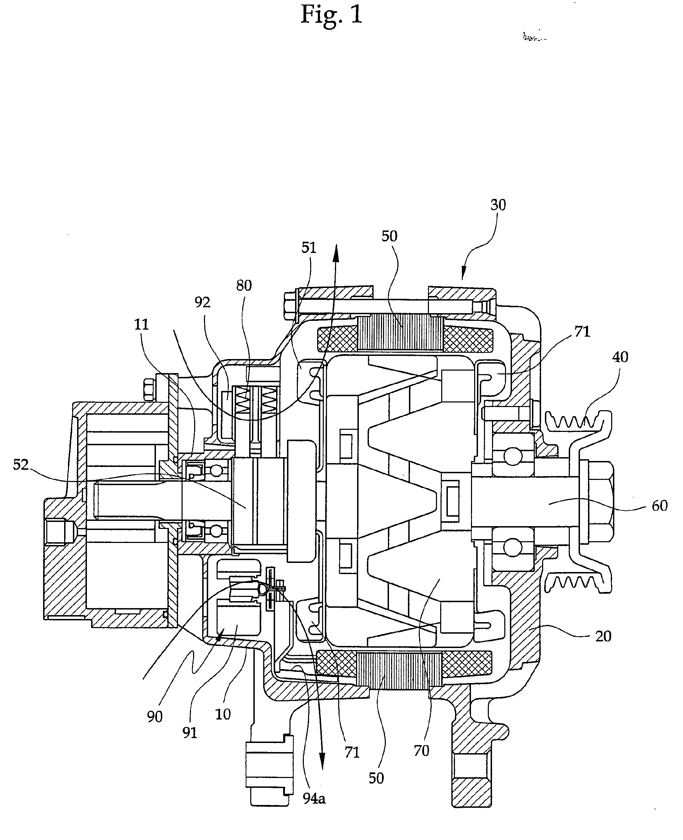

As shown in Figure 1, when the fan 71 is rotated, the air is inputted and outputted in the arrow direction through a plurality of through holes formed in the rear bracket 10. In this case the input and output of the air do not effectively affect the cooling. Since the insulation wall 94a interferes the flow of air, the cooling performed is significantly decreased.

The input amount of the air is increased in proportion to the output amount of the same.

In the case that an insulation wall is provided, the fabrication process of the insulation wall is additionally added. In the entire assembling processes, the above process should be added, so that the number of the processes is increased.

### SUMMARY OF THE INVENTION

Accordingly, it is an object of the present invention to overcome the problems encountered in the conventional art.

It is another object of the present invention to provide a circuit board of an alternator for a vehicle capable of achieving a counter surface of a fan by improving the structure of a circuit board.

It is further another object of the present invention to provide a circuit board of an alternator for a vehicle capable of significantly enhancing a cooling performance of an alternator by effectively outputting the air by a fan by removing an insulation wall of a conventional plate.

To achieve the above objects, in a vehicle alternator that includes a casing formed of a rear bracket having a shaft support part and a front bracket, a shaft that is installed in the interior of a casing, with a pulley being fixed to one end of the shaft, a rotor fixed to the shaft, a fan fixed to both sides of the rotor, a stator fixed to an inner wall surface of the casing, a slip ring that is fixed to the other end of the shaft for supplying current to the rotor, a pair of brushes that slide with respect to the slip ring, a brush assembly that receives the brush, a rectifier assembly that is electrically connected with the stator, a heat sink that is installed in the brush assembly, and a regulator that is contacted with the heat sink and adjusts the size of an alternating current voltage generated by the stator, there is provided a circuit board including a terminal in a vehicle alternator, comprising a first terminal part for connecting with a coil of the stator and a diode; and a second terminal part for connecting with the regulator, wherein said terminals parts are integrally provided, and wherein the circuit board is assembled on an upper side of the heat sink, and the circuit board is made of an insulation material and is formed in a flat plate shape so that a counter surface is formed in the fan.

### BRIEF DESCRIPTION OF THE DRAWINGS

The present invention will become better understood with reference to the accompanying drawings which are given only by way of illustration and thus are not limitative of the present invention, wherein;
Figure 1 is a view illustrating a conventional vehicle alternator;

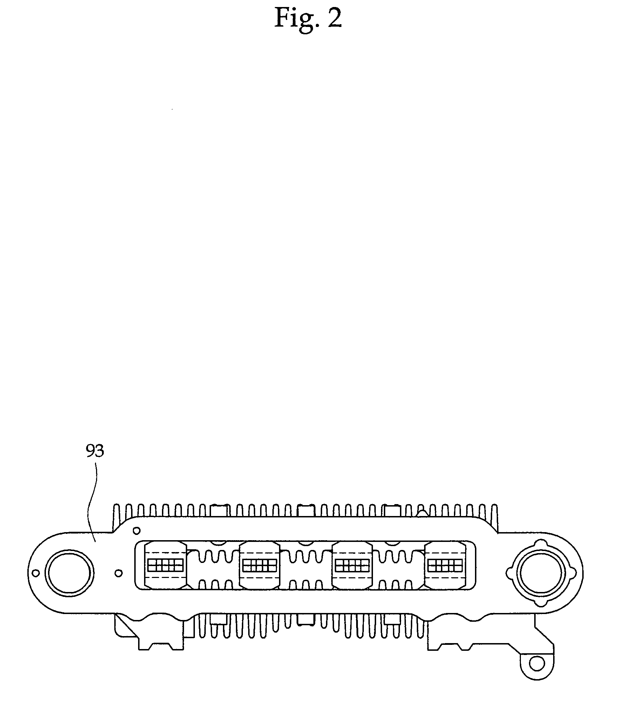

Figure 2 is a perspective view illustrating an assembling state of a conventional circuit board;

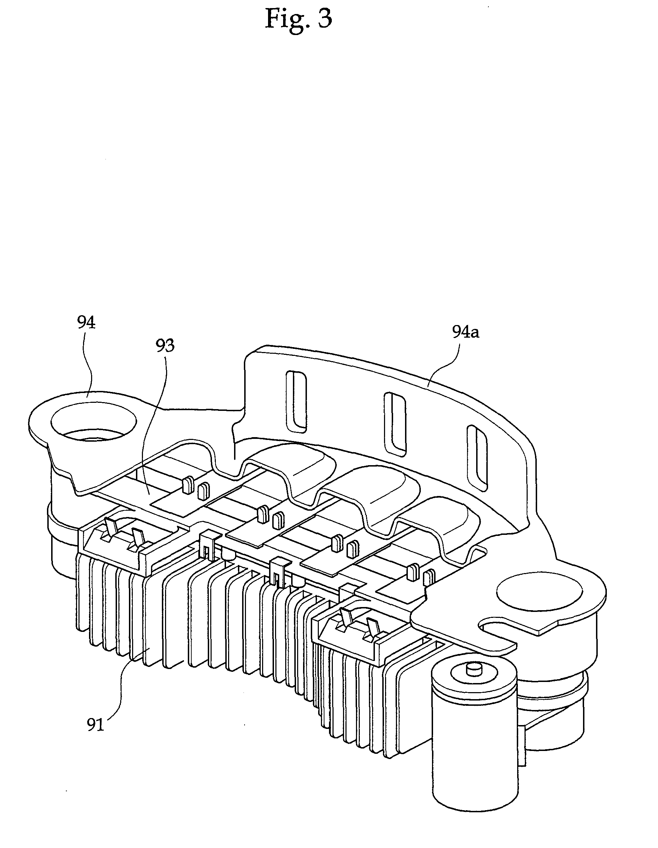

Figure 3 is a perspective view illustrating an assembled state of a conventional circuit board and a heat sink;
Figure 4 is a perspective view illustrating a circuit board according to the present invention; and
Figure 5 is a perspective view illustrating an assembled state of a circuit board and a heat sink according to the present invention.

### DETAILED DESCRIPTION OF THE PREFERRED EMBODIMENTS

The construction and operation of the present invention will be described with reference to the accompanying drawings.

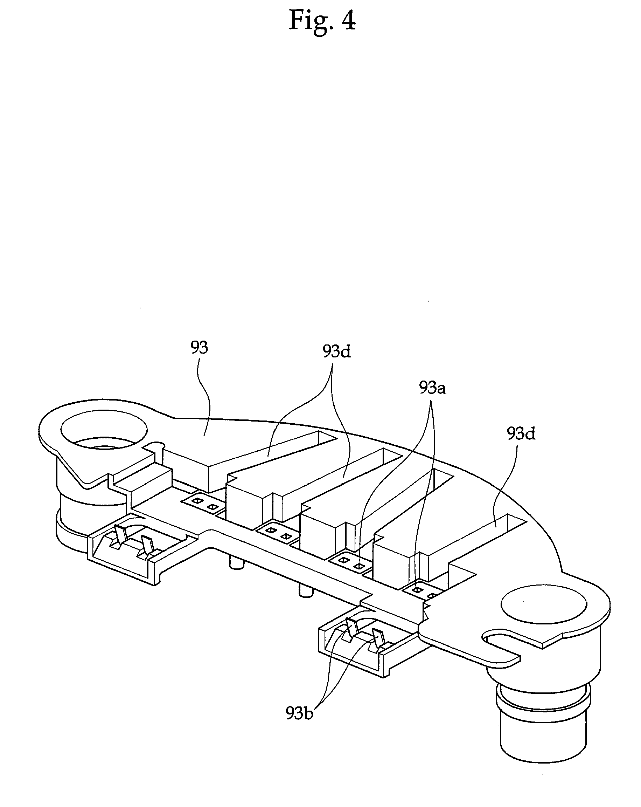

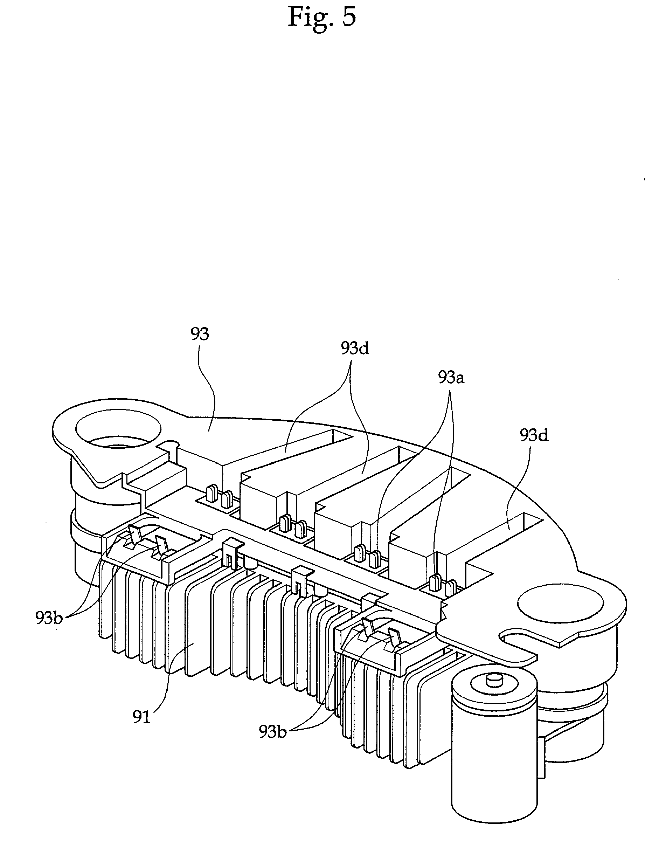

Figure 4 is a perspective view illustrating a circuit board according to the present invention, and Figure 5 is a perspective view illustrating an assembled state of a circuit board and a heat sink according to the present invention. First, in the vehicle alternator like in the conventional art, there are provided a casing 30 formed of a rear bracket 10 having a shaft support part 11 and a front bracket 20, a shaft 60 that is installed in the interior of the casing, with a pulley 40 being fixed to one end of the shaft, a rotor 70 fixed to the shaft, a fan 71 fixed to both sides of the rotor, a stator 50 fixed to an inner wall surface of the casing, a slip ring 52 that is fixed to the other end of the shaft for supplying current to the rotor, a pair of brushes 81 that slide with respect to the slip ring, a brush assembly 80 that receives the brush, a rectifier assembly 90 that is electrically connected with the stator, a heat sink 91 that is installed in the brush assembly, and a regulator 92 that is contacted with the heat sink and adjusts the size of an alternating current voltage generated by the stator.

In the present invention, the circuit board 93 is assembled to the upper side of the heat sink 91, and the circuit board 93 is formed of an insulation material. The construction of the same is shown in Figure 4.

Namely, the circuit board 93 is formed in a flat plate shape so that it operates as a counter surface of the fan 71. A first terminal part 93a for connecting with a coil of the stator and a diode and a second terminal part 93b for connecting with the regulator 92 are integrally formed on the upper surface of the circuit board 93. The terminal parts 93a have a guide groove 93d for achieving an easier coil connection.

As shown in Figure 5, the circuit board 93 of the present invention is assembled with the heat sink 91 and the circuit board 93 faces the fan 71 when the entire construction is installed in an inner side of the rear bracket 10.

Since a conventional insulation wall is not formed in one side of the circuit board 93 facing the fan 71, the input amount of the air inputted through the through holes of the rear bracket 10 is increased, and the air is widely spread into the interior of the alternator including the heat sink 91 for thereby helping a cooling operation.

In addition, the connection of the circuit board 93 is easily achieved by the first terminal part 93a including the guide groove 93d.

As described above, in the present invention, since the structure of the circuit board is improved to have the terminal together, it is possible to achieve a counter surface operation of the fan without an additional plate. In the present invention, the insulation wall of the conventional plate is removed, so that the input of the air by the fan is effectively performed, and a cooling performance of the alternator is significantly enhanced.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a vehicle alternator that includes a casing 30 formed of a rear bracket 10 having a shaft support part 11 and a front bracket 20, a shaft 60 that is installed in the interior of a casing, with a pulley 40 being fixed to one end of the same, a rotor 70 fixed to the shaft, a fan 71 fixed to both sides of the rotor, a stator 50 fixed to an inner wall surface of the casing, a slip ring 52 that is fixed to the other end of the shaft for supplying current to the rotor, a pair of brushes 81 that slide with respect to the slip ring, a brush assembly 80 that receives the brush, a rectifier assembly 90 that is electrically connected with the stator, a heat sink 91 that is installed in the brush assembly, and a regulator 92 that is contacted with the heat sink and adjusts the size of an alternating current voltage generated by the stator, a circuit board including a terminal in a vehicle alternator, comprising:
a first terminal part 93a for connecting with a coil of the stator and a diode; and
a second terminal part 93b for connecting with the regulator 92, wherein said terminals parts 93a and 93b are integrally provided, and wherein the circuit board 93 is assembled on an upper side of the heat sink 91, and the circuit board 93 is made of an insulation material and is formed in a flat plate shape so that a counter surface is formed in the fan.

2. The board of claim 1, wherein said circuit board 93 includes a guide groove 93d in the first terminal part 93a.
